# EUROPÄISCHE PATENTSCHRIFT

(11) **EP 1 946 144 B1**
(45) Veröffentlichungstag und Bekanntmachung des Hinweises auf die Patenterteilung: **11.03.2009**
(21) Anmeldenummer: 06806489.8
(22) Anmeldetag: 24.10.2006
(51) Int. Cl.: G01S 7/52, G01K 1/00

(54) **SONARANTENNENMODUL MIT REGULIERBAREM LUFTINNENDRUCK ZUR WASSERABDICHTUNG**
SONAR ANTENNA MODULE WHOSE INTERNAL PRESSURE CAN BE REGULATED FOR WATER SEALING
MODULE D'ANTENNE SONAR A PRESSION INTERIEURE D'AIR REGULABLE POUR ASSURER L'ETANCHEITE A L'EAU

(30) Priorität: 10.11.2005 DE 102005053644
(43) Veröffentlichungstag der Anmeldung: 23.07.2008
(73) Patentinhaber: ATLAS Elektronik GmbH, 28309 Bremen (DE)
(72) Erfinder: LONKAI, Andreas, 28755 Bremen (DE)
(74) Vertreter: Wasiljeff, Johannes M.B.
(86) Internationale Anmeldenummer: PCT/EP2006/010222
(87) Internationale Veröffentlichungsnummer: WO 2007/054202

(56) Entgegenhaltungen:
- EP-A2- 0 247 375
- DE-A1- 3 202 781
- US-A- 3 126 559
- US-A- 5 103 432
- US-A- 5 140 560

## Beschreibung

Die Erfindung betrifft ein Antennenmodul für eine an Bord eines Schiffes installierten Sonareinrichtung nach dem Oberbegriff des Anspruchs 1.

Ein solches Antennenmodul befindet sich, als Antennenausfahrgerät bezeichnet, an Minenjagdschiffen, die mit Minenjagdsonaren ausgerüstet sind, unterhalb des Schiffsrumpfs und kann bei Nichtgebrauch durch eine im Rumpfboden vorgesehene Öffnung in einen im Rumpfinnern ausbildeten Schacht vollständig eingefahren werden. Hierzu ist der Antennenträger vertikal verschiebbar ausgebildet und das Antennengehäuse um eine horizontal ausgerichtete Achse am Antennenträger schwenkbar gehalten, so dass die Unterwasserantenne zum Einfahren des Moduls in eine vertikale Ausrichtung überführt werden kann. Am Antennenträger ist noch eine weitere, ebenfalls in einem Gehäuse aufgenommene Unterwasserantenne, eine sog. Vertikalantenne, befestigt, die sich am Antennenträger in Vertikalrichtung schwenken lässt und dessen Gehäuseinneres ebenfalls mit dem Hohlraum im Antennenträger in Verbindung steht. In dem hohlen Gehäuseinnern der Unterwasserantennen sind mit den Wandlerausgängen verbundene Signalverstärker und weitere Elektronikbauteile untergebracht. Elektrische Signalleitungen, die im Innern des Antennenträgers verlaufen, stellen eine elektrische Verbindung der Unterwasserantennen zu dem im Schiff installierten Sonarkabinett her.

Es hat sich gezeigt, dass, insbesondere alterungsbedingt über Dichtungen zwischen Antennenträger und Gehäuse der Unterwasserantennen, die Gefahr von Wassereintritt besteht. Wird der Wassereintritt nicht gleich zu Beginn erkannt, führt das eindringende Wasser zu einer erheblichen Schädigung der elektronischen und elektroakustischen Bauteile der Unterwasserantenne bis hin zum irreparablen Ausfall der Unterwasserantenne.

Der Erfindung liegt die Aufgabe zugrunde, bei einem Antennenmodul der eingangs beschriebenen Art der Gefahr eines Wassereintritts zu begegnen, indem Undichtigkeiten im Antennenmodul noch vor Wassereintritt erkannt und ein Wassereintritt bis zur Beseitigung der Undichtigkeiten verhindert wird.

Die Aufgabe ist erfindungsgemäß durch die Merkmale im Anspruch 1 gelöst.

Das erfindungsgemäße Antennenmodul hat den Vorteil, dass durch Herstellen eines Gasdrucks im Modulinnern, der inklusive eines Sicherheitszuschlags größer ist als der hydrostatische Druck in der Einsatztiefe des Antennenmodul, bei Auftreten von Undichtigkeiten das Gas, z.B. Luft, aus dem Antennenmodul austritt und damit das Eindringen von Wasser verhindert. Zugleich fällt der Druck im Modulinnern ab, was durch den Drucksensor erkannt wird. Der Druckabfall macht die Undichtigkeit des Antennenmoduls deutlich, so dass letzteres aus dem Wasser genommen werden kann, noch bevor Wasser in das Modulinnere eindringt und Schäden verursacht.

Zweckmäßige Ausführungsformen des erfindungsgemäßen Antennenmoduls mit vorteilhaften Weiterbildungen und Ausgestaltungen der Erfindung ergeben sich aus den weiteren Ansprüchen.

Gemäß einer vorteilhaften Ausführungsform der Erfindung ist am Antennenträger ein Druckgasspeicher über ein Dosierventil angeschlossen und das Dosierventil mittels des Drucksensors steuerbar. Die Steuerung ist derart vorgenommen, dass bei Abfall des vom Drucksensor gemessenen Drucks im Modulinnern unter einen Vorgabewert das Dosierventil öffnet und unter Druck stehendes Gas aus dem Druckgasspeicher in den Antennenträger einströmt. Dies hat den Vorteil, dass bei plötzlich auftretenden, großen Undichtigkeiten, die zu einem Druckabfall im Modulinnern bis unter den in der Einsatztiefe des Antennenmoduls herrschenden hydrostatischen Druck führen würden, dem Modulinnern wieder Druckgas zugeführt wird, so dass über einen längeren Zeitraum hinweg im Modulinnern ein das Eindringen von Wasser in das Antennenmodul verhindernder Mindestdruck aufrechterhalten werden kann. Dieser verlängerter Zeitraum, in dem trotz Undichtigkeit das Eindringen von Wasser verhindert wird, verschafft genügend Spielraum, um das Antennenmodul vor Wassereintritt aus dem Wasser zu nehmen.

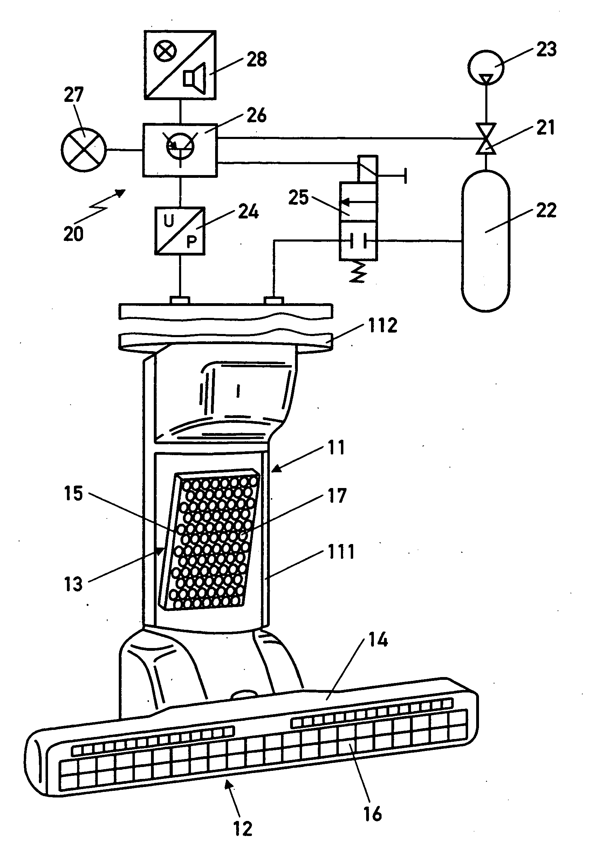

Die Erfindung ist anhand eines in der Zeichnung dargestellten Ausführungsbeispiels im folgenden näher beschrieben. Dabei zeigt die Zeichnung ein Antennenmodul mit einer Schutzvorrichtung gegen Wassereintritt.

Das in der Zeichnung perspektivisch dargestellte Antennenmodul für eine an Bord eines Minenjagdschiffes installierte Sonareinrichtung, weist einen Antennenträger 11, eine Horizontalantenne 12 und eine Vertikalantenne 13 auf, die an einem am unteren Ende des Antennenträgers 11 ausgebildeten Tragabschnitt 111 gehalten sind. Jede der beiden Antennen 12, 13 besitzt in bekannter Weise ein Gehäuse 14 bzw. 15, in dem eine Wandleranordnung 16 bzw. 17 mit einer vom Antennenträger 11 wegweisenden Sende- und/oder Empfangsrichtung aufgenommen ist. Die Wandleranordnungen 16, 17 sind als Linien- und/oder Flächenarray ausgebildet. Die Innenräume der Gehäuse 14, 15 stehen mit dem Innenraum des hohlen Antennenträgers 211 in Verbindung. In den Innenräumen der Gehäuse 14, 15 sind an den Ausgängen der Wandler der Wandleranordnungen 16, 17 angeschlossene Signalverstärker und weitere elektronische Baugruppen enthalten, die über Signalleitungen mit dem im Schiff installierten Komponenten der Sonareinrichtung verbunden sind. Die Signalleitungen sind im Innern des hohlen Antennenträgers 11 geführt.

Zum Ein- und Ausfahren des Antennenmoduls in den Schiffsrumpf durch eine im Schiffsrumpf vorgesehene Öffnung hindurch, weist der Antennenträger 11 einen von dem Tragabschnitt 111 sich zum Schiff hin fortsetzenden Ausfahrabschnitt 112 auf, der im Schiffsrumpf axial verschieblich geführt ist. Das Gehäuse 14 der Horizontalantenne 12 ist am Tragabschnitt 111 um eine horizontale Achse schwenkbar gehalten, so dass sie vor Einfahren des Antennenträgers 11 in eine vertikal ausgerichtete Einfahrstellung drehbar ist. Das Gehäuse 15 der Vertikalantenne 13 ist über ein Gelenk vertikal schwenkbar am Tragabschnitt 111 gehalten. Zum Einfahren des Antennenmoduls wird die Vertikalantenne 13 ebenfalls in eine vertikale Ausrichtung überführt, so dass die Vertikalantenne 13 und die vor die Vertikalantenne 13 geschwenkte Horizontalantenne 12 etwa parallel ausgerichtet sind und innerhalb der Umrisslinie des Ausfahrabschnitts 112 liegen.

Der Antennenträger 11 und die Gehäuse 14, 15 sind druckdicht ausgebildet, und die Verbindungsstellen der Gehäuse 14, 15 mit dem Antennenträger 11, durch die auch die Signalleitungen hindurchgeführt sind, sind mittels Dichtungen abgedichtet, so dass weder über die Gehäuse 14, 15 noch über die Verbindungsstellen Wasser in das hohle Innere von Antennenträger 11 und Gehäuse 14, 15 der Horizontal- und Vertikalantenne 12, 13 eindringen kann.

Um einen Wassereintritt an den Verbindungsstellen oder sonstigen Stellen von Antennenträger 11 und Horizontal- und Vertikalantennen 12, 13 zu verhindern, was beispielsweise durch Alterungen der Dichtungen an den Verbindungsstellen zwischen Antennenträger 11 und Horizontal- und Vertikalantenne 12, 13 möglich ist, ist an dem Antennenträger 11 eine in der Zeichnung als Blockschaltbild dargestellte Schutzvorrichtung 20 angeschlossen. Die Schutzvorrichtung 20 weist einen Druckluftspeicher 22, eine Druckluftpumpe 23, einen Drucksensor 24, ein Dosierventil 25 und eine Steuerelektronik 26 auf. Das Dosierventil 25 kann, wie im Ausführungsbeispiel dargestellt, als 2/2-Wegemagnetventil mit Federrückstellung ausgebildet sein, das von der Steuerelektronik 26 angesteuert wird. Der Druckluftspeicher 22 ist über das Dosierventil 25 an dem druckdicht verschlossenen Ende des Antennenträgers 11 angeschlossen. Der Drucksensor 24 ist mit seinem pneumatischen Druckeingang ebenfalls an dem Ende des Antennenträgers 11 und mit seinem elektrischen Signalausgang an der Steuerelektronik 26 angeschlossen. Mittels der Druckluftpumpe 23 kann über ein Absperrventil 21 der Druckluftspeicher 22 gefüllt werden. Das Absperrventil 21, das beispielsweise als 2/2-Wegemagnetventil mit Federrückstellung ausgebildet sein kann, wird ebenfalls von der Steuerelektronik 26 gesteuert.

Außerdem sind an der Steuerelektronik 26 eine Warnanzeige 27 und eine Signaleinheit 28 angeschlossen.

Das hohle Innere von Antennenträger 11, Horizontalantenne 12 und Vertikalantenne 13 wird bei geöffnetem Dosierventil 25 aus dem Druckluftspeicher 22 mit Druckluft solange gefüllt, bis der Drucksensor 24 einen Druck im Modulinnern sensiert, der einer vorgegebenen Druckschwelle entspricht. Die Druckschhwelle liegt oberhalb des in der Einsatztiefe des Antennenmoduls herrschende Wasserdrucks. Damit keine Falschalarme auftreten, werden bei der Vorgabe der Druckschwelle auch im Betrieb des Antennenmoduls zu erwartende Temperaturänderungen berücksichtigt. Beispielsweise kann die Temperatur des in den Schacht eingefahrenen Antennenmoduls größer sein als die unter dem Schiffsrumpf herrschende Wassertemperatur. Wird das Antennenmodul aus dem Schacht ausgefahren und in Betrieb genommen, so kühlt es sich auf die Wassertemperatur ab. Ist der Druck im Antennenmodul bei der höheren Temperatur im Schacht eingestellt, so fällt er nach Ausfahren des Antennenmoduls ab. Dabei darf die Druckschwelle nicht unterschritten werden, da ansonsten Falschalarm ausgelöst wird. Bei der Festlegung der Druckschwelle muss daher ein entsprechender Sicherheitszuschlag zu dem in Einsatztiefe herrschenden Wasserdruck vorgehalten werden, der dem Rechnung trägt. Bei einer Einsatztiefe von ca. 4m unter der Wasseroberfläche liegt die vorgegebene Druckschwelle oberhalb von ca. 1,0 bis 1,5 bar Überdruck bzw. 2,0 bis 2,5 bar Absolutdruck. Nach Übersteigen dieses Drucks im Innenraum des Antennenmoduls wird der Druckluftspeicher 22 durch Umschalten des Dosierventils 25 vom Antennenträger 11 getrennt, und nach Spannen des Druckluftspeichers 22 wird das Absperrventil 21 geschlossen, so dass der Luftdruck im Druckluftspeicher 22 bei abgeschalteter Druckluftpumpe 23 aufrechterhalten bleibt.

Während des Einsatzes des Antennenmoduls wird der im Innern des Antennenmoduls herrschende Luftdruck fortlaufend mittels des Drucksensors 24 sensiert. Solange das Antennenmodul dicht ist, bleibt der Druck im Innern des Antennenmoduls annähernd konstant. Treten geringe Undichtigkeiten auf, so strömt Druckluft über die Undichtigkeiten in das Wasser ab, wodurch der Wassereintritt an den undichten Stellen verhindert wird. Gleichzeitig fällt der Druck im Modulinnern ab. Sinkt der Druck unter einen in der Steuerelektronik 26 eingestellten Vorgabewert ab, der gleich oder wenig kleiner als die vorgenannte Druckschwelle ist, so schaltet die Steuerelektronik 26 die Warnanzeige 27 ein, die den Druckabfall im Antennenmodul visualisiert. Die Bedienmannschaft kann daraufhin das Antennenmodul aus dem Wasser nehmen und die undichten Stellen beseitigen. Wird das Herausnehmen des Unterwassermoduls unmittelbar nach dem Aufleuchten der Warnanzeige 27 vorgenommen, so kann zwischenzeitlich kein Wasser in das Antennenmodul eindringen, da nach wie vor der Druck im Innenraum größer ist als der Wasserdruck.

Sinkt der Druck im Antennenmodul jedoch infolge eines größeren Lecks sehr viel schneller ab und unterschreitet z.B. auch eine niedrigere zweite Druckschwelle, so generiert die Steuerelektronik 26 ein Umschaltsignal für das Dosierventil 25. Mit Umschalten des Dosierventils 25 strömt Luft aus dem Druckluftspeicher 22 in das Innere des Antennenträgers 11, wodurch verhindert wird, dass der Druck im Antennenmodul mit der damit verbundenen Gefahr des Wassereintritts weiter absinkt. Mit Umschalten des Dosierventils 25 wird von der Steuerelektronik 26 die Signaleinheit 28 eingeschaltet, die ein optisches und/oder akustisches Warnsignal ausgibt. Dadurch wird der Bedienungsmannschaft signalisiert, dass für die Herausnahme des Antennenmoduls aus dem Wasser höchste Eile geboten ist, um einen Wassereintritt zu vermeiden.

Anstelle von Luft kann selbstverständlich auch ein anderes Gas verwendet werden.

## Patentansprüche

1. Antennenmodul für eine an Bord eines Schiffes installierte Sonareinrichtung mit einem zur Anordnung am Schiffsrumpf ausgebildeten, hohlen Antennenträger (11) und mit mindestens einer Unterwasserantenne (12, 13), die ein am Antennenträger (11) gehaltenes Gehäuse (14, 15) und eine in dem Gehäuse (14, 15) aufgenommene Wandleranordnung (16, 17) aus einer Vielzahl von elektroakustischen Wandlern aufweist, **dadurch gekennzeichnet, dass** Antennenträger (11) und Gehäuse (14, 15) unter Verbindung ihrer Innenräume druckdicht ausgebildet sind, dass in den Innenräumen mittels eines gasförmigen Mediums ein Innenraumdruck hergestellt ist, der größer ist als der hydrostatische Druck in der Einsatztiefe des Antennenmoduls, und dass ein den Innenraumdruck überwachender Drucksensor (24) und eine bei einem Abfall des Innenraumdrucks unter einen Vorgabewert aktivierbare Warnanzeige (27) vorgesehen sind.

2. Antennenmodul nach Anspruch 1, **dadurch gekennzeichnet, dass** der Antennenträger (11) über ein Dosierventil (25) an einem Druckgasspeicher (22) angeschlossen ist und dass das Dosierventil (25) abhängig von dem vom Drucksensor (24) sensierten Druck so gesteuert ist, dass es bei einem Abfall des Innenraumdrucks unter einen zweiten Vorgabewert öffnet.

3. Antennenmodul nach Anspruch 2, **dadurch gekennzeichnet, dass** der zweite Vorgabewert einen gegenüber dem ersten Vorgabewert kleineren Druckwert aufweist.

4. Antennenmodul nach Anspruch 2 oder 3, **dadurch gekennzeichnet, dass** eine das Öffnen des Dosierventils (25) kennzeichnende Signaleinheit (28) vorgesehen ist.

5. Antennenmodul nach einem der Ansprüche 2-4, **dadurch gekennzeichnet, dass** der Steuereingang des Dosierventils (25), die Warnanzeige (27) und die Signaleinheit (28) an einer elektronischen Steuervorrichtung (26) angeschlossen sind, der das elektrische Ausgangssignal des Drucksensors (24) zugeführt ist.

6. Antennenmodul nach einem der Ansprüche 2 bis 5, **dadurch gekennzeichnet, dass** der über das Dosierventil (25) führende Anschluss des Druckgasspeichers (22) und der pneumatische Anschluss des Drucksensors (24) an dem von der Unterwasserantenne (12, 13) abgekehrten, druckdicht geschlossenen Ende des Antennenträgers (11) vorgenommen ist.

7. Antennenmodul nach einem der Ansprüche 1 bis 6, **dadurch gekennzeichnet, dass** das Druckgas von komprimierter Luft gebildet ist.

## Claims

1. Antenna module for a sonar device which is installed on board a marine vessel, has a hollow antenna mount (11) designed for arrangement on the marine vessel hull and has at least one underwater antenna (12, 13) which has a housing (14, 15), held on the antenna mount (11), and a transducer arrangement (16, 17), which is accommodated in the housing (14, 15) and has a multiplicity of electroacoustic transducers, **characterized in that** the antenna mount (11) and the housing (14, 15) are designed to be pressure-tight with their internal areas being connected, **in that** an internal-area pressure which is greater than the hydrostatic pressure at the operating depth of the antenna module is produced in the internal areas by means of a gaseous medium, and **in that** a pressure sensor (24), which monitors the internal-area pressure, and a warning indication (27), which can be activated if the internal-area pressure falls below a preset value, are provided.

2. Antenna module according to Claim 1, **characterized in that** the antenna mount (11) is connected via a metering valve (25) to a compressed-gas reservoir (22), and **in that** the metering valve (25) is controlled as a function of the pressure sensed by the pressure sensor (24) such that it opens if the internal-area pressure falls below a second preset value.

3. Antenna module according to Claim 2, **characterized in that** the second preset value has a pressure value which is lower than the first preset value.

4. Antenna module according to Claim 2 or 3, **characterized in that** a signaling unit (28) is provided and identifies the opening of the metering valve (25).

5. Antenna module according to one of Claims 2 - 4, **characterized in that** the control input of the metering valve (25), the warning indication (27) and the signaling unit (28) are connected to an electronic control apparatus (26), to which the electrical output signal from the pressure sensor (24) is supplied.

6. Antenna module according to Claims 2 to 5, **characterized in that** the connection of the compressed-gas reservoir (22), which passes via the metering valve (25), and the pneumatic connection of the pressure sensor (24) are provided at that end of the antenna mount (11) which is remote from the underwater antenna (12, 13) and is sealed to be pressure-tight.

7. Antenna module according to Claims 1 to 6, **characterized in that** the compressed gas is formed by compressed air.

## Revendications

1. Module d'antenne pour un équipement sonar installé à bord d'un navire comprenant un support d'antenne (11) creux conçu pour être disposé sur la coque du navire et comprenant au moins une antenne sous-marine (12, 13), laquelle présente un boîtier (14, 15) maintenu sur le support d'antenne (11) et un arrangement de transducteurs (16, 17) constitué d'une pluralité de transducteurs électroacoustiques logé dans le boîtier (14, 15), **caractérisé en ce que** le support d'antenne (11) et le boîtier (14, 15) sont réalisés hermétiques à la pression en reliant leurs espaces intérieurs, qu'une pression d'espace intérieure est établie dans les espaces intérieurs au moyen d'un fluide gazeux, laquelle est supérieure à la pression hydrostatique à la profondeur d'utilisation du module d'antenne, et que sont prévus un capteur de pression (24) qui surveille la pression d'espace intérieur ainsi qu'un indicateur d'alerte (27) qui peut être activé lorsque la pression d'espace intérieur chute au-dessous d'une valeur prédéfinie.

2. Module d'antenne selon la revendication 1, **caractérisé en ce que** le support d'antenne (11) est raccordé à un réservoir de gaz comprimé (22) par le biais d'une valve de dosage (25) et que la valve de dosage (25) est commandée en fonction de la pression détectée par le capteur de pression (24) de telle sorte qu'elle s'ouvre si la pression d'espace intérieur chute au-dessous d'une deuxième valeur prédéfinie.

3. Module d'antenne selon la revendication 2, **caractérisé en ce que** la deuxième valeur prédéfinie présente une valeur de pression inférieure à celle de la première valeur prédéfinie.

4. Module d'antenne selon la revendication 2 ou 3, **caractérisé en ce qu'**il est prévu une unité de signal (28) qui caractérise l'ouverture de la valve de dosage (25).

5. Module d'antenne selon l'une des revendications 2 à 4, **caractérisé en ce que** l'entrée de commande de la valve de dosage (25), l'indicateur d'alerte (27) et l'unité de signal (28) sont raccordés à un dispositif de commande électronique (26) auquel est acheminé le signal de sortie électrique du capteur de pression (24).

6. Module d'antenne selon l'une des revendications 2 à 5, **caractérisé en ce que** le raccordement du réservoir à gaz comprimé (22) acheminé par le biais de la valve de dosage (25) et le raccordement pneumatique du capteur de pression (24) sont effectués au niveau de l'extrémité du support d'antenne (11) fermée et hermétique à la pression qui se trouve à l'opposé de l'antenne sous-marine (12, 13).

7. Module d'antenne selon l'une des revendications 1 à 6, **caractérisé en ce que** le gaz comprimé est formé d'air comprimé.
